(19) Europäisches Patentamt

European Patent Office

Office européen des brevets

(11) Veröffentlichungsnummer: **0 290 079 B1**

## (12) EUROPÄISCHE PATENTSCHRIFT

(45) Veröffentlichungstag der Patentschrift: **09.12.92**

(21) Anmeldenummer: **88200786.7**

(22) Anmeldetag: **25.04.88**

(51) Int. Cl.⁵: **G11B 15/44**, G11B 15/29

(54) **Schaltvorrichtung an einem Magnetbandgerät für Autoreversebetrieb.**

(30) Priorität: **02.05.87 DE 3714705**

(43) Veröffentlichungstag der Anmeldung:
**09.11.88 Patentblatt 88/45**

(45) Bekanntmachung des Hinweises auf die Patenterteilung:
**09.12.92 Patentblatt 92/50**

(84) Benannte Vertragsstaaten:
**DE FR GB IT**

(56) Entgegenhaltungen:
**EP-A- 0 031 976**
**EP-A- 0 047 552**
**EP-A- 0 095 815**
**FR-A- 2 193 228**
**GB-A- 2 079 514**

**PATENT ABSTRACTS OF JAPAN vol. 11, no. 291 (P-618)(2738) 19 September 1987, & JP-A-62 086564**

**PATENT ABSTRACTS OF JAPAN vol. 7, no. 48 (P-178)(1193) 24 Februar 1983, & JP-A-57 195356**

(73) Patentinhaber: **Philips Patentverwaltung GmbH**
**Wendenstrasse 35 Postfach 10 51 49**
**W-2000 Hamburg 1(DE)**

(84) Benannte Vertragsstaaten:
**DE**

(73) Patentinhaber: **N.V. Philips' Gloeilampenfabrieken**
**Groenewoudseweg 1**
**NL-5621 BA Eindhoven(NL)**

(84) Benannte Vertragsstaaten:
**FR GB IT**

(72) Erfinder: **Klös-Hein, Karl**
**Erlenweg 18**
**W-6301 Wismar(DE)**
Erfinder: **Rumpf, Horst**
**Hauptstrasse 22**
**W-6348 Herborn-Schönbach(DE)**

(74) Vertreter: **Kupfermann, Fritz-Joachim, Dipl.-Ing. et al**
**Philips Patentverwaltung GmbH Wendenstrasse 35 Postfach 10 51 49**
**W-2000 Hamburg 1(DE)**

**Beschreibung**

Die Erfindung bezieht sich auf eine Schaltungvorrichtung an einem Magnetbandgerät für Autoreversebetrieb mit einem zwischen zwei Wickeltellern schwenkbaren Getriebe, das in einer ersten Lage einem ersten Wickelteller und in einer zweiten Lagen einem zweiten Wickelteller antreibt, wobei das schwenkbare Getriebe bei Bandrichtungsumkehr zwischen der ersten und zweiten Lage eine Umschalteinrichtung für Druckrollen bedient, die über einen Schieber wechselseitig eine erste bzw. eine zweite an Hebeln gelagerte Druckrolle gegen Federkraft von einer zugeordneten Tonwelle abhebt.

Aus der EP-A-47 552 ist ein Magnetbandgerät der eingangs genannten Gattung bekannt. Dieses bekannte Magnetbandgerät für Autoreversebetrieb ist mit einem schwenkbaren Getriebe versehen, um beispielsweise bei Bandende den Antrieb von einem Wickelteller des Gerätes auf den anderen Wickelteller umzuschalten. Gleichzeitig mit dem Umschalten des Antriebes von einem Wickelteller auf den anderen Wickelteller müssen die Andruckrollen derart umgeschaltet werden, daß eine zunächst an einer Tonwelle anliegende Druckrolle von dieser Tonwelle abgehoben wird und das eine andere Druckrolle an eine andere Tonwelle angelegt wird. Das schwenkbare Getriebe kann beim Umlegen von dem einenWickelteller zum anderen Wickelteller nur in einembestimmten mittleren Umstellbereich die Kraft für die Umschaltung der Druckrollen aufliefern. Dies beruht auf der Notwendigkeit, daß die Wickelteller gut gekuppelt werden und daß die Kraftübertragung nicht durch weitere Bauteile gestört oder belastet wird. Zum Umschalten steht also nur ein relativ kurzer Umschwenkbereich des Schwenkgetriebes zur Verfügung. Dies wiederum macht die Entkupplung des Schwenkgetriebes von den Druckrollen schwierig. Der Aufbau des Gerätes muß deshalb sehr genau sein und verträgt keine größeren Toleranzen.

Es ist Aufgabe der Erfindung, eine Schaltungsvorrichtung nach dem Oberbegriff des Anspruches 1 zu schaffen, bei der die Druckrollenbetätigung im gesamten Schwenkbereich des Schwenkgetriebes möglich ist, wobei die Vollendung der Druckrollenumsteuerung aber durch vom Schwenkgetriebe unabhängige Bauteile möglich ist.

Die gestellte Aufgabe ist erfindungsgemäß dadurch gelöst, daß die Kurvenhebel Steuerkurven aufweisen, die von den Druckrollenhebeln abgefahren werden, wobei dann, wenn das Schwenkgetriebe in die Nähe des ersten oder zweiten Wickeltellers kommt, immer einer der Kurvenhebel mit einem Druckabschnitt der Steuerkurve von der Federkraft auf den zugeordneten Druckrollenhebel derart weiter gedreht wird, daß der Schieber von dem Druckrollenhebel in eine Endlage gedrängt wird, in der das Schwenkgetriebe von der Umschalteinrichtung entkuppelt wird.

Dieser Aufbau hat den Vorteil, daß die Druckrollenumsteuerung mittels der Federbelastung der Druckrollenhebel im Endbereich der Umstellung erfolgt. Da die Federbelastung ohnehin vorhanden ist, werden also keine zusätzlichen Bauteile für die Umsteuerung im Endbereich benötigt. Das Schwenkgetriebe ist mithin für das Umsteuern der Druckrollen nur in seinem mittleren Bereich zuständig und leitet praktisch nur das Umsteuern der Druckrollen ein. Die Umsteuerung wird vorgenommen und vollendet über jeweils einen Druckrollenhebel unter Zuhilfenahme jeweils eines Kurvenhebels. Der Vorteil dieses Aufbaues besteht auch darin, daß das Schwenkgetriebe im Betrieb von der Umschalteinrichtung entkuppelt ist, so daß das Schwenkgetriebe allein auf die Wickelteller arbeiten kann.

Nach einer weiteren Ausgestaltung der Erfindung ist vorgesehen, daß der Kurvenhebel einen Stift aufweist, der formschlüssig mit dem Schieber verbunden ist, wodurch der Kurvenhebel von Bewegungen des Schiebers mitgenommen wird bzw. der Schieber von Bewegungen einer der Druckrollenhebel über den zugeordneten Kurvenhebel verschoben wird. Die Umschaltbewegung der Druckrollen bzw. der Druckrollenhebel wird also immer zunächst von dem Schieber eingeleitet und dann von den Druckrollenhebeln übernommen.

Nach einer weiteren Ausgestaltung der Erfindung ist vorgesehen, daß die Steuerkurve einen konzentrisch zur Drehachse angeordneten Gleitabschnitt aufweist, der an den Druckabschnitt anschließt, der einen kleineren Abstand zur Drehachse aufweist. Diese zwei unterschiedlichen Abschnitte der Steuerkurve sind notwendig, weil nämlich immer eine Druckrolle an einer Tonrolle anliegt und die andere abgehoben sein muß. Immer diejenige Druckrolle, die von der zugeordneten Tonwelle abgehoben ist, wird abgehoben gehalten über den Gleitabschnitt. Die andere Druckrolle sorgt über den Druckabschnitt dafür, daß der Kurvenhebel den Schieber in eine der Endlagen schiebt.

Nach einer weiteren Ausgestaltung der Erfindung ist vorgesehen, daß der Schieber eine Gabel aufweist und die Gabelzinken während der Steuerung mit dem Schwenkgetriebe gekuppelt sind, bis einer der Durckrollenhebel beginnt, den Schieber in Richtung einer seiner Endlagen zu drängen, in der der Schieber vom Schwenkgetriebe entkuppelt. Das Schwenkgetriebe wirkt also über jeweils einen der Gabelzinken auf den Schieber ein und schiebt ihn in der gewünschten Umschaltrichtung. Da die weitere Schiebebewegung von einem Kurvenhebel übernommen wird, wird das Schwenkgetriebe dann wieder von der Berührung mit den Gabelzinken befreit.

Gemäß einer anderen Ausführungsform der Erfindung ist vorgesehen, daß der Schieber aus zwei gegeneinander verschiebbaren Teilen besteht, wobei ein erster Schieberteil mit einem und ein zweiter Schieberteil mit dem anderen Druckrollenhebel zusammen arbeitet, daß der erste Schieberteil mit einer ersten und der zweite Schieberteil mit einer zweiten Ankerplatte versehen sind, und daß die Schieberteile wechselseitig von dem Schwenkgetriebe in Endlagen verschoben werden, in denen die Druckrollen von den zugeordneten Tonwellen abgehoben sind und in denen die Ankerplatten und damit die Schieberteile elektromagnetisch festgehalten werden. Sind beide Schieberteile in ihre Endlagen geschoben, dann können beide Druckrollen abgehoben werden. Damit ist die Möglichkeit geschaffen, einen Schnellspulvorgang vorzunehmen. Dies kann beispielsweise erreicht werden, indem der Elektromagnet als Zugmagnet ausgebildet ist, und in der Lage ist, die Ankerplatten anzuziehen, um damit die Schieberteile gegeneinander zu versschieben.

Nach einer weiteren Ausgestaltung dieser Ausführungsform ist vorgesehen, daß die Ankerplatten festgehalten werden mittels einer Elektromagnetvorrichtung mit Magnetspule und Spulenkörper, wobei der Spulenkörper durchzogen ist von Schenkeln zweier U-förmig gebogener, magnetisch gegeneinander isolierter Jocheisen, deren freie Ende als Polschuhe dienen, wobei die Jocheisen derart angeordnet sind, daß sich im Bereich beider axialer Spulenenden jeweils zwei Polschuhe befinden, die mit der ersten bzw. zweiten Ankerplatte zusammenwirken. Bei dieser Ausführungsform wird nur ein Elektromagnet benötigt, der auf beide Ankerplatten einwirken kann und beide Ankerplatten in gegenläufigen Richtungen bewegt. Eine derartige Anordnung ist außerordentlich energiesparend.

Nach einer weiteren Ausgestaltung der Erfindung ist vorgesehen, daß die Schenkel der Jocheisen parallel zu den Schieberteilen verlaufen. Dadurch wird eine sehr effiziente Bewegung der Schieberteile erreicht.

Nach einer weiteren Ausgestaltung der Erfindung ist vorgesehen, daß zum Abheben beider Druckrollen wechselseitig eine der Druckrollen von einem der Kurvenhebel und die andere Druckrolle von einem der Schieberteile abgehoben wird. Auf diese Weise ist eine Kombination zwischen einer rein mechanischen Druckrollenumschaltung und einer elektromagnetischen Druckrollenabhebung in den Endbereichen der Bewegung erreicht. Außerdem kann bei dieser Ausführungsform der Elektromagnet als Haltemagnet ausgebildet sein, was stromsparend ist und die Magnetanordnung verbilligt.

Nach einer weiteren Ausgestaltung der Erfindung ist vorgesehen, daß der Schieber und die Schieberteile parallel zueinander verschiebbar sind und gemeinsam vom Schwenkgetriebe über einen Stellhebel verschoben werden. Eine solche Anordnung spart Platz, je nachdem ob dieser Platz in der Ebene oder in der Tiefe benötigt wird oder eingespart werden soll.

Die Erfindung wird anhand der Zeichnung näher erläutert. Es zeigen:

Fig. 1 eine Schaltungsvorrichtung an einem Magnetbandgerät für Autoreversebetrieb mit einem zwischen zwei Wickeltellern schwenkbaren Getriebes und einer Umschalteinrichtung für an Tonwellen anlegbare Druckrollen,

Fig. 2 eine vergrößerte Darstellung eines Ausschnittes der Umschalteinrichtung nach Fig. 1,

Fig. 3 die Schaltungsvorrichtung im Augenblick einer Umschaltung des schwenkbaren Getriebes,

Fig. 4 die Umschalteinrichtung in einer der Endlage nach Fig. 1 gegenüberliegenden Endlage,

Fig. 5 den unteren Teil der Fig. 1, wobei allerdings beide Tonwellen abgehoben sind.

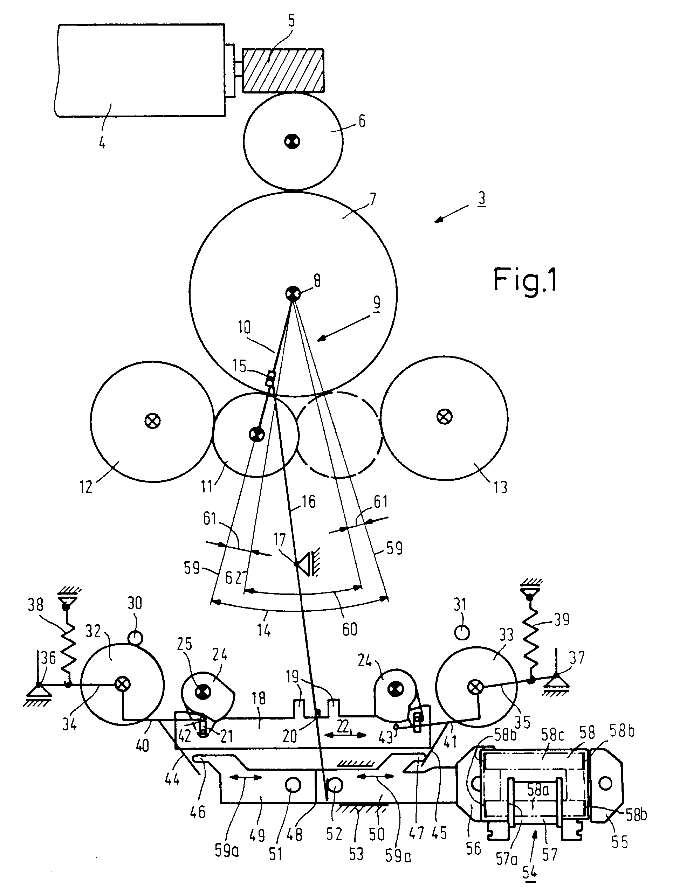

Die Figuren 1, 3 und 4 zeigen in schematischer Darstellung einen Wickeltellerantrieb 3 eines Magnetbandgerätes. Zu dem Wickeltellerantrieb 3 gehört ein in beiden Drehrichtungen antreibbarer Motor 4, der über eine Schneckenwelle 5 ein Untersetzungszahnrad 6 antreibt. Das Untersetzungszahnrad 6 kämmt mit einem Zentralzahnrad 7. Um die Zentralwelle 8 des Zentralzahnrades 7 ist ein Schwenkgetriebe 9 verschwenkbar, welches aus einem Schwenkarm 10 und einem an ihm drehbar gelagerten Übertragungszahnrad 11 besteht. Das Übertragungszahnrad 11 kann Drehbewegungen des Zentralzahnrades 7 auf ein erstes Wickeltellerrad 12 oder ein zweites Wickeltellerrad 13 übertragen. Dazu ist das Übertragungszahnrad 11 umlenkbar in Richtung eines Doppelpfeiles 14. An dem Schwenkarm 10 ist über ein Gelenk 15 ein Stellhebel 16 angelenkt, der um ein Kipplager 17 kippen kann.

Es ist eine Umschaltvorrichtung 18a vorgesehen mit einem Schieber 18 und mit Gabelzinken 19, zwischen die ein Mitnehmer 20 des Stellhebels 16 greift. Der Schieber weist Längsschlitze 21 auf, die senkrecht zu der durch einen Doppelpfeil 22 angedeuteten Verschieberichtungdes Schiebers 18 verlaufen. In die Längsschlitze 21 greifen Stifte 23 von Kurvenhebeln 24, die um Kurvenhebellager 25 verschwenkbar sind. An die Stelle von Längsschlitz 21 und Stift 23 kann auch eine anders geartete formschlüssige Verbindung treten, beispielsweise Zahnstange und Zahnsegment. Die Kurvenhebel 24 sind mit einem Gleitabschnitt 26 und einem Druckabschnitt 27 versehen, wobei der Druckabschnitt einen kleineren Abstand von der Drehachse 28 des Kurvenhebellagers 25 hat.

Das Magnetbandgerät ist mit Tonwellen 30, 31 versehen, mit denen ein nicht dargestelltes Magnetband bei angelegten Druckrollen 32, 33 an einem nicht dargestellten Tonkopf vorbeiziehbar ist. Die Druckrollen 32, 33 sind an Druckrollenhebeln 34, 35 drehbar gelagert. Die Druckrollenhebel selbst sind um Stützlager 36, 37 verschwenkbar und Zugfedern 38, 39 sind bestrebt, die Druckrollen 32, 33 gegen die ihnen zugeordneten Tonwellen 30, 31 zu ziehen. An jedem Druckrollenhebel 34, 35 ist noch ein Ausleger 40, 41 angeordnet, der mit einem Gleitstück 42 bzw. 43 die aus Gleitabschnitten 26 und Druckabschnitten 27 gebildten Abtastkurven abfährt.

An den Auslegern 40 und 41 sind Stellarme 44, 45 vorgesehen, die mit Zapfen 46, 47 eines Kombischiebers 48 zusammenwirken. Der Kombischieber 48 besteht aus zwei Teilschiebern 49, 50. Der Zapfen 46 ist Bestandteil des Teilschiebers 49 und der Zapfen 47 ist Bestandteil des Teilschiebers 50. Der Teilschieber 49 hat einen Anschlag 51 und der Teilschiebe 50 hat einen Anschlag 52. Beide Teilschieber 49 und 50 sind in einer gemeinsamen Schiebeführung 53 geführt und erstrecken sich zu einer Elektromagnetvorrichtung 54. In Bereich der Elektromagnetvorrichtung 54 ist der Teilschieber 49 mit einer Ankerplatte 55 und der Teilschieber 50 mit einer Ankerplatte 56 versehen. Die Elektromagnetvorrichtung 54 trägt in einem Spulenkörper 54a eine Magnetspule 57. Die Magnetspule 47 wird durchsetzt von Schenkeln 58a, U-förmig gebogener Jocheisen 58, die magnetisch gegeneinander isoliert sind.

Die Jocheisen 58 sind derart entgegengesetzt angeordnet, daß sich im Bereich beider axialen Spulenenden 57a jeweils zwei Polschuhe 58b befinden, die mit den Ankerplatten 55 bzw. 56 zusammenarbeiten. Die die Spule 57 durchgreifenden Schenkel 58a und die außerhalb liegenden Schenkel 58c der Jocheisen 58 verlaufen parallel zu den Schieberteilen 49, 50. Die Elektromagnetvorrichtung 54 ist in der DE-A-37 14 704 (PHD 87-084, eingereicht 2. Mai 1987) ausführlich beschrieben. Die Polschuhpaare 58 arbeiten mit den Ankerplatten 55,56 zusammen. Beide Teilschieber 49, 50 sind parallel zu der Verschieberichtung 22 des Schiebers 18 in Richtung eines Doppelpfeiles 59a verschiebbar.

Zu dem Schwenkgetriebe 9 ist noch anzumerken, daß sein Gesamtschwenkbereich, angegeben durch den Pfeil 14 durch Endlagen 59 begrenzt ist. Zwischen diesen Endlagen 59 gibt es noch einen durch einen Doppelpfeil 60 angegebenen Bereich, in dem das Schwenkgetriebe durch mechanische Kopplung entweder über Reibung oder über ein Zahnrad kraftschlüssig umgelegt wird. In den Randbereichen 61 ist die kraftschlüssige Bewegung aufgehoben und das Verschwenken des Übertragungszahnrades 11 erfolgt mit Hilfe des Schiebers 18 auf noch weiter zu beschreibende Weise.

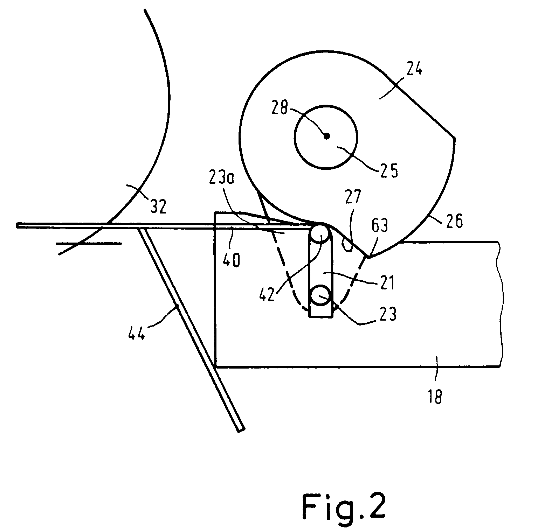

Es sei bei der Darstellung nach Fig. 1 angenommen, daß das Übertragungszahnrad 11 in Richtung auf das Wickeltellerrad 12 verschwenkt wurde. Dieses Verschwenken wurde dadurch erreicht, daß mit Hilfe des Zentralzahnrades 7 das Übertragungszahnrad 11 im Schwenkbereich 60 in Richtung auf das Wickeltellerrad 12 bewegt wurde bis zum Erreichen der Linie 62 am Rande des Schwenkbereiches 60. Die Verschwenkrichtung ist abhängig von der Motordrehrichtung. Bei diesem Verschwenken ist der Mitnehmer 20 gegen die rechte Gabelzinke 19 gestoßen und hat den Schieber 18 nach rechts verschoben. Bereits vor dem Erreichen der Linie 62 ist das Gleitstück 42 von dem Gleitabschnitt 26 auf den Druckabschnitt 27 des Kurvenhebels 24 gelangt. Dies beruht darauf, daß der Stift 23 in dem Längsschlitz 21 von dem Schieber 18 nach rechts mitgenommen wurde und daß das zuvor auf dem Gleitabschnitt 26 laufende Gleitstück 42 über eine Übergangskante 63 auf den Druckabschnitt 27 aufgelaufen ist (Fig. 2). Die Zugfeder 38, die das Gleitstück 42 gegen den Druckabschnitt 27 drückt hat dann dafür gesorgt, daß die Druckkraft auf den Kurvenhebel 24 zu seinem Umschwenken entgegen dem Uhrzeigersinn gesorgt hat. Dieses mittels der Zugfeder 38 besorgte Umschwenken des Kurvenhebels 24 entgegen dem Uhrzeigersinn hat nun bewirkt, daß der Stift 23 des Kurvenhebels 24 über den Längsschlitz 21 den Schieber 18 noch weiter nach rechts verschoben hat, bis das Übertragungszahnrad 11 friktionsabhängig die Endlage 59 erreicht hat und damit das Zentralzahnrad 7 das Wickeltellerrad 12 antreibt.

Dadurch, daß der Schieber 18 von den Zugfedern 38 und 39 über die Kurvenhebel 24 vom Ende des Schwenkbereiches 60 getriebefrei in eine seiner beiden Endlagen gebracht wird, hat das Schwenkgetriebe 9 dann, wenn eine der Andruckrollen 32, 33 an eine der zugeordneten Tonwellen 30, 31 anliegt, keine kuppelnde Verbindung mit der Umschaltvorrichtung 18a. Das Schwenkgetriebe ist damit in den Spiellagen vollständig von der Umschaltvorrichtung 18a entkuppelt und entlastet.

Fig. 2 zeigt in vergrößerter Darstellung das Zusammenwirken der Kurvenhebel 24 mit dem Schieber 18 und dem Gleitstück 42 des Auslegers 40. Der Stift 23, der durch den Längsschlitz 21 hindurchgreift ist auf der Rückseite des Schiebers 18 an einem Nocken 23a befestigt, der mit dem Kurvenhebel 24 fest verbunden und gemeinsam um die Drehachse 28 verschwenkbar ist.

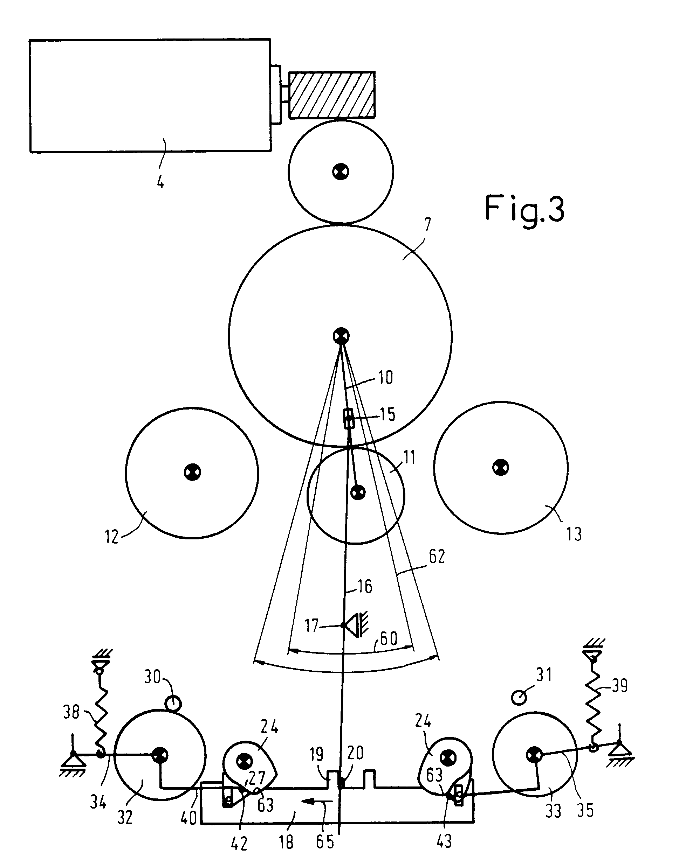

Fig. 3 zeigt, wie nach einer Drehrichtungsänderung des Motors 4 das Zentralzahnrad 7 das Übertragungszahnrad 11 von dem Wickeltellerrad 12 abgehoben und in Richtung auf das andere Wickeltellerrad 13 verrollt hat, wobei der Schwenkarm 10 entgegen dem Uhrzeigersinn verschwenkt wurde. Gleichzeitig hat der Schwenkarm 10 den Stellhebel 16 um das Kipplager 17 verschwenkt und der Mitnehmer 20 ist gegen den linken Gabelzinken 19 gestoßen. Der Stellhebel 16 nimmt damit den Schieber 18 in Richtung eines Pfeiles 65 nach links mit. Dieses nach links verschieben des Schiebers 18 führt dazu, daß das Gleitstück 42 des Auslegers 40 auf dem Druckabschnitt 27 in Richtung auf die Übergangskante 63 zuläuft. Da sich der Schwenkbereich des Schwenkarmes 10 im kraftschlüssigen Mitnahmebereich des Zentralzahnrades 7 befindet, überwindet das Gleitstück 42 entgegen der Kraft der Zugfeder 38 die scheinbare Steigung auf dem linken Kurvenhebel 24. Bei dem rechten Kurvenhebel 24 hat das Gleitstück 43 gerade die Übergangskante 63 erreicht und es wird gleich auf den Druckabschnitt 27 auflaufen. Ist der Druckabschnitt 27 erreicht, dann erreicht auch kurz darauf das Schwenkgetriebe mit dem Schwenkarm 10 das Ende der kraftschlüssigen Verbindung, das durch die Linie 62 angedeutet ist. Die Zugfeder 39 übernimmt nach dem Ende der nicht dargestellten kraftschlüssigen Verbindung zwischen dem Zentralzahnrad 7 und dem Übertragungszahnrad 11 die weitere Verschwenkung des Schwenkarmes 10 nach rechts, in dem nämlich das Gleitstück 43 über den rechten Kurvenhebel 24 den Schieber 18 weiter nach links schiebt bis in seine Endlage 18a, in der das Übertragungszahnrad 11 das Wickeltellerrad 13 erreicht hat und damit die kraftschlüssige Verbindung von dem Zentralzahnrad 7 über das Zwischenzahnrad 11 zum Wickelteller 13 hergestellt ist.

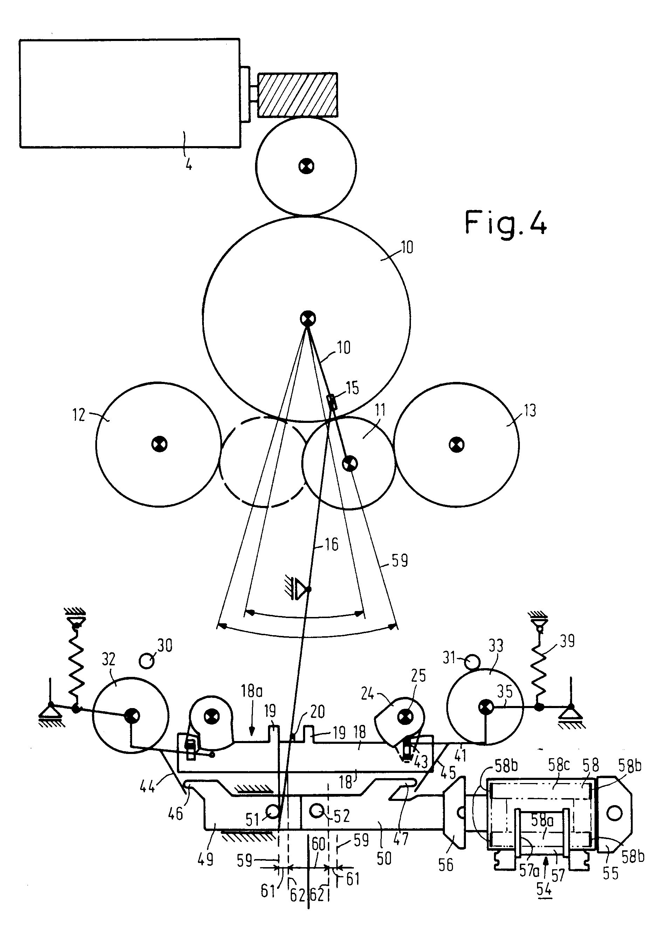

Diese Endlage ist in Fig. 4 dargestellt. Es soll aber noch einmal bei Fig. 3 verweilt werden und auf das miteinander von Druckrollen 32, 33 und Tonwellen 30, 31 hingewiesen werden.

In Fig. 1 hat die Druckrolle 32 an der Tonwelle 30 angelegen und die Druckrolle 33 war von der Tonwelle 31 abgehoben. Durch das Auflaufen des Gleitstückes 42 auf den Druckabschnitt 27 des linken Kurvenhebels 24 in Richtung auf die Kurvenkante 63 fängt der Ausleger 40 an, die Druckrolle 32 von der Tonwelle 30 zu heben. Bei der Darstellung nach Fig. 3 liegt die Druckrolle 32 noch an der Tonwelle 30 an.

In der Darstellung nach Fig. 4 hat der Schwenkarm 10 seine rechte Endlage, angedeutet durch die Linie 59, erreicht. In dieser Endlage 59 liegt der Stellhebel 16 mit seinem Mitnehmer 20 von den Gabelzinken 19 frei um den Betrag des Hubspieles 61. Mittels der Kraft der Zugfeder 39 hat der Ausleger 41 mittels des Gleitstückes 43 den rechten Kurvenhebel 24 soweit im Uhrzeigersinn gedreht, daß der Ausleger 41 dichter an das Kurvenhebellager herangerückt ist. Das hat dazu geführt, das die Feder 39 über den im Uhrzeigersinn verschwenkenden Druckrollenhebel 35 die Druckrolle 33 an die Tonwelle 31 angelegt hat. Der Spielbetrieb kann nun in der Gegenrichtung beginnen, weil Tonwelle 31 und Druckrolle 33 das Band in der gegenüber der Darstellung nach Fig. 1 entgegengesetzten Richtung an dem nicht dargestellten Tonkopf vorbeiziehen können. Die Druckrolle 32 ist in der Stellung nach Fig. 4 von der Tonwelle 30 abgehoben.

In Fig. 1 und 4 sind unterhalb des Schiebers 18 die Teilschieber 49, 50 und die Elektromagnetvorrichtungen 54 dargestellt. An sich arbeitet die Schaltungsvorrichtung ohne die zusätzlichen Teilschieber 49, 50 mit der Elektromagnetvorrichtung 54. Es ist aber ebensogut möglich, auf den Schieber 18 mit den Kurvenhebeln 24 zu verzichten und allein mit den Teilschiebern 49, 50 und der Elektromagnetvorrichtung 54 zu arbeiten.

Im Fall des Verzichts auf den Schieber 18 sei angenommen, daß die Elektromagnetvorrichtung so ausgelegt ist, daß sie in der Lage ist, die Ankerplatten 55, 56 um die Randschwenkbereiche 61 anzuziehen. Geht man davon aus, daß die Druckrolle 32 an der Tonwelle 30 anliegt, dann hat der Ausleger 40 über den Stellarm 44 und den Zapfen 46 den Teilschieber 49 soweit nach rechts geschoben, daß die Ankerplatte 55 ausreichend weit von ihren Polschuhen 58 weggeschoben ist. Der Teilschieber 49 kann dann allein durch Magnetkraft nicht nach links in Abheberichtung verschoben werden. Anders ist es mit dem Schieberteil 50 und der Ankerplatte 56. Der Stellhebel 16 hatte über den Anschlag 52 den Schieberteil 50 nach links verschoben, bis in den Endbereich 62 des gekuppelten Schwenkgetriebes 9. Der Abstand zwischen der Ankerplatte 56 und den zugeordneten Polschuhen 58b hat sich dadurch so verringert, daß nunmehr die Ankerplatte 56 angezogen werden konnte und der Schieberteil 50 hat den Randschwenkbereich 61 elektromagnetisch überwunden. Dabei hat der Zapfen 47 über den Stellarm 45 und den Ausleger 41 die Andruckrolle 33 von der Tonwelle 31 abgezogen.

Fig. 4 zeigt die Gegenstellung. Der Teilschieber 50 wurde von dem Stellarm 45 mittels der Zugfeder 39 soweit nach links verschoben, daß die Anzugskraft der Polschuhe 58b nicht mehr ausreicht, die Ankerplatte 56 anzuziehen. Der Stellhebel 16 hat aber durch sein Auflaufen gegen den Anschlag 51 den Schieberteil 49 soweit nach links terschoben, daß die Ankerplatte 55 nahe genug an die hier zugeordneten Polschuhe 58b herangezogen wurde, um nun magnetisch bis an die rechten Polschuhe 58b herangezogen zu werden. Dabei hat der Zapfen 46 über den Stellarm 44 die Druckrolle 32 von der Tonwelle 30 abgehoben.

Kommt die Schaltungsvorrichtung in einem Laufwerk eines Autoradios zum Einsatz, dann kommt es darauf an, daß von ihr möglichst wenig Wärme entwickelt wird. Die Wärmeentwicklung läßt sich bei der Schaltungsvorrichtung dadurch verringern, daß die Elektromagnetvorrichtung 54 nur als Haltemagnetvorrichtung ausgelegt wird. Das bedeutet zwar, daß sie nicht selbst stellaktiv ist; in Verbindung mit der Umschaltvorrichtung 18a mit dem Schieber 18 läßt sich diese Zusatzvorrichtung, bestehend aus den Schieberteilen 49, 50 und der Elektromagnetvorrichtung 54, dazu einsetzen, beide Druckrollen 32, 33 von den zugeordneten Tonwellen 30 bzw. 31 abzuheben. Man betrachte Fig. 4 mit der abgehobenen Druckrolle 32, bei der die Ankerplatte 55 an den zugeordneten Polschuhen 58b anliegt. Ist die Magnetspule 57 in diesem Augenblick erregt, dann bleibt die Ankerplatte 55 an den Polschuhen 58b hängen und der Zapfen 46 drückt über den Stellarm 44 die Druckrolle 32 weiterhin von der Tonwelle 30 ab.

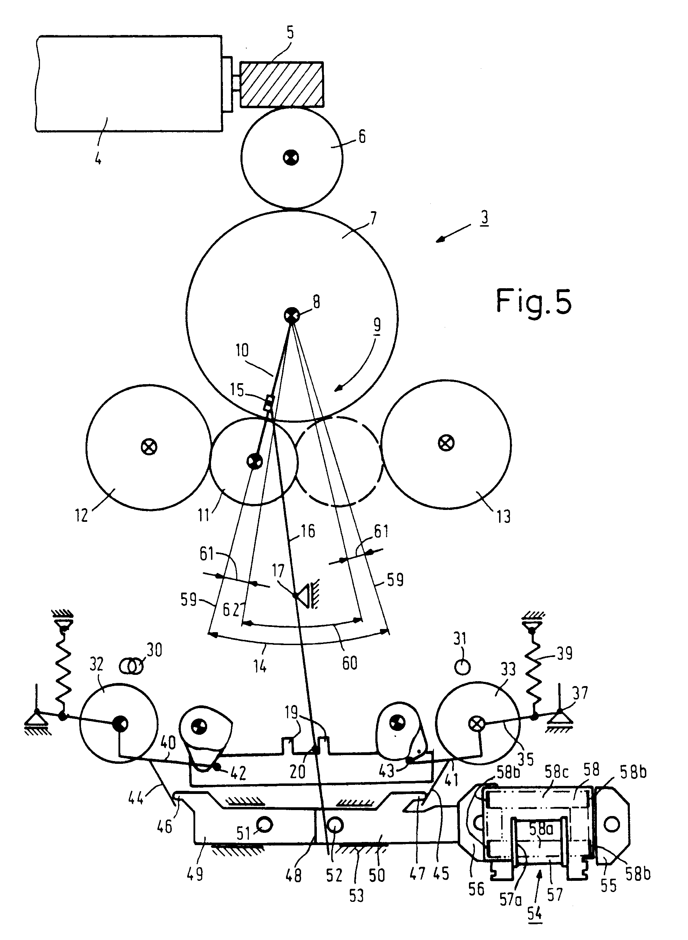

Schwenkt nun der Schwenkarm 10 aufgrund einer Drehrichtungsänderung des Motors 4 das Übertragungszahnrad 11 im Uhrzeigersinn in Richtung auf das Wickeltellerrad 12, dann drückt, wie aus Fig. 1 zu ersehen ist, der Stellhebel 16 gegen den Anschlag 52, wodurch der Schieberteil 50 nach rechts verschoben wird und sich die Ankerplatte 56 den ihr zugeordneten Polschuhen 58b nähert. Bei genügender Annäherung legt sich die Ankerplatte 56 unter Überwindung der Weglänge 61 an die Polschuhe 58b an und nun wird auch die Andruckrolle 33 von dem Zapfen 47 über den Stellarm 45 von der zugeordneten Tonwelle 31 abgehoben. Das bedeutet, daß nunmehr beide Druckrollen 32, 33 von ihren zugeordneten Tonwellen 30, 31 abgehoben sind. Damit ist beispielsweise ein Schnellspulbetrieb möglich. Diese Stellung ist aus Fig. 5 zu erkennen.

**Patentansprüche**

1. Schaltungsvorrichtung an einem Magnetbandgerät für Autoreversebetrieb mit einem zwischen zwei Wickeltellern (12, 13) schwenkbaren Getriebe (9), das in einer ersten Lage einen ersten Wickelteller (12) und in einer zweiten Lage einen zweiten Wickelteller (13) antreibt, wobei das schwenkbare Getriebe bei Bandrichtungsumkehr zwischen der ersten und zweiten Lage eine Umschalteinrichtung (18a) für Druckrollen (32, 33) bedient, die über einen Schieber (18) wechselseitig eine erste bzw. eine zweite an Hebeln (34, 35) gelagerte Druckrolle (32, 33) gegen Federkraft von einer zugeordneten Tonwelle (30, 31) abhebt, dadurch gekennzeichnet, daß jeder der Druckrollenhebel (34, 35) über einen ersten bzw. zweiten um eine Drehungsachse (28) drehbaren Kurvenhebel (24) und über das Schwenkgetriebe (9) und den Schieber (18) gesteuert wird und daß die Kurvenhebel (24) Steuerkurven (26, 27) aufweisen, die von den Druckrollenhebeln (34, 35) abgefahren werden, wobei dann, wenn das Schwenkgetriebe (9) in die Nähe des ersten oder zweiten Wickeltellers (12, 13) kommt, immer einer der Kurvenhebel (24) mit einem Druckabschnitt (27) der Steuerkurve von der Federkraft auf den zugeordneten Druckrollenhebel (34, 35) derart weitergedreht wird, daß der Schieber (18) von dem Druckrollenhebel (34, 35) in eine Endlage (59) gedrängt wird, in der das Schwenkgetriebe (9) von der Umschalteinrichtung (18a) entkuppelt wird.

2. Schaltungsvorrichtung nach Anspruch 1, dadurch gekennzeichnet, daß der Kurvenhebel (25) einen Stift (23) aufweist, der formschlüssig mit dem Schieber (18) verbunden ist, wodurch der Kurvenhebel (24) von Bewegungen des Schiebers (18) mitgenommen wird bzw. der Schieber (18) von Bewegungen einer der Druckrollenhebel (35, 35) über den zugeordneten Kurvenhebel verschoben wird.

3. Schaltungsvorrichtung nach Anspruch 2, dadurch gekennzeichnet, daß die Steuerkurve einen ersten konzentrisch zur Drehachse (28) angeordneten Gleitabschnitt (26) aufweist, der an den Druckabschnitt (27) anschließt, der einen kleineren Abstand zur Drehachse (28) aufweist.

4. Schaltungsvorrichtung nach einem der Ansprüche 1 bis 3, dadurch gekennzeichnet, daß der Schieber (18) eine Gabel aufweist und die Gabelzinken (19) während der Steuerung mit dem Schwenkgetriebe (9) gekuppelt sind bis einer der Druckrollenhebel (34, 35) beginnt, den Schieber (18) in Richtung einer seiner Endlagen zu drängen, in der der Schieber (18) vom Schwenkgetriebe (9) entkuppelt.

5. Schaltungsvorrichtung an einem Magnetbandgerät für Autoreversebetrieb mit einem zwischen zwei Wickeltellern (12, 13) schwenkbaren Getriebe (9), das in einer ersten Lage einen ersten Wickelteller (12) und in einer zweiten Lage einen zweiten Wickelteller (13) antreibt, wobei das schwenkbare Getriebe bei Bandrichtungsumkehr zwischen der ersten und zweiten Lage eine Umschalteinrichtung (18a) für Druckrollen (32, 33) bedient, die über einen Schieber (18) wechselseitig eine erste bzw. eine zweite an Hebeln (34, 35) gelagerte Druckrolle (32, 33) gegen Federkraft von einer zugeordneten Tonwelle (30, 31) abhebt,

dadurch gekennzeichnet, daß der Schieber (48) aus zwei gegeneinander verschiebbaren Teilen (49, 50) besteht, wobei ein erster Schieberteil (49) mit einem (34) und ein zweiter Schieberteil (50) dem anderen Druckrollenhebel (35) zusammen arbeitet, daß der erste Schieberteil (49) mit einer ersten (55) und der zweite Schieberteil (50) mit einer zweiten Ankerplatte (56) versehen sind und daß die Schieberteile (49, 50) wechselseitig von dem Schwenkgetriebe (9) verschoben werden in Endlagen, in denen die Druckrollen (32, 33) von den zugeordneten Tonwellen (30, 31) abgehoben sind und in denen die Ankerplatten (55, 56) und damit die Schieberteile (49, 50) elektromagnetisch festgehalten werden.

6. Schaltungsvorrichtung nach Anspruch 5, dadurch gekennzeichnet, daß die Ankerplatten (55, 56) festgehalten werden mittels einer Elektromagnetvorrichtung (54) mit Magnetspule (57) und Spulenkörper (54a), wobei der Spulenkörper (54a) durchsetzt ist von Schenkeln (58a) zweier U-förmig gebogener, magnetisch gegeneinander isolierter Jocheisen (58), deren freie Enden als Polschuhe (58b) dienen, wobei die Jocheisen derart entgegengesetzt angeordnet sind, daß sich im Bereich beider axialer Spulenenden (57a) jeweils zwei Polschuhe (58a) befinden, die mit der ersten bzw. zweiten Ankerplatte zusammenwirken.

7. Schaltungsvorrichtung nach Anspruch 6, dadurch gekennzeichnet, daß die Schenkel (58a) der Jocheisen (58) parallel zu den Schieberteilen (49 50) verlaufen.

8. Schaltungsvorrichtung nach den Ansprüchen 1 und 5, dadurch gekennzeichnet, daß zum Abheben beider Druckrollen (32, 33) wechselseitig eine der Druckrollen (32, 33) von einem der Kurvenhebel (24) und die andere Druckrolle (32, 33) von einem der Schieberteile (49, 50) abgehoben wird.

9. Schaltungsvorrichtung nach Anspruch 8, dadurch gekennzeichnet, daß der Schieber (18) und die Schieberteile (49, 50) parallel zueinander verschiebbar sind und gemeinsam vom Schwenkgetriebe (9) über einen Stellhebel (16) verschoben werden.

**Claims**

1. A switching device in a magnetic-tape apparatus for the auto-reverse operation, comprising a drive mechanism (9) which is pivotable between two turntables (12, 13) to drive a first turntable (12) in a first position and a second turntable (13) in a second position, which pivotal drive mechanism, when it is pivoted between the first and the second position in the case of a reversal of the direction of tape transport, actuates a change-over device (18a) for pressure rollers (32, 33,) which device by means of a slide (18) lifts a first or a second pressure roller (32, 33) carried by a lever (34, 35) off an associated capstan (30, 31) against spring force, characterised in that each of the pressure-roller levers (34, 35) is actuated via a first and a second cam lever (24) respectively, which are pivotable about a pivotal axis (28), and via the pivotal drive mechanism (9) and the slide (18), and the cam levers (24) comprise cam surfaces (26, 27) which are followed by the pressure-roller levers (34, 35) and, when the pivotal drive mechanism (9) approaches the first or the second turntable (12, 13), always one of the cam levers (24) is pivoted further, via a pressure portion of the cam surface, by the spring force acting on the associated pressure-roller lever (34, 35), in such a way that the slide (18) is urged into an end position (59) by the pressure-roller lever (34, 35), in which end position the pivotal drive mechanism (9) is disengaged from the change-over device (18a).

2. A switching device as claimed in Claim 1, characterised in that the cam lever (25) comprises a pin (23) which interlocks with the slide (18), so that the cam lever (24) is actuated by movements of the slide (18), or the slide is actuated by movements of one of the pressure-roller levers (34, 35) via the associated cam lever.

3. A switching device as claimed in Claim 2, characterised in that the cam surface comprises a sliding portion (26) which is concentric with the pivotal axis (28) and which adjoins the pressure portion (27), which is spaced at a smaller distance from the pivotal axis (28).

4. A switching device as claimed in any one of the Claims 1 to 3, characterised in that the slide (18) comprises a fork and during actuation the fork tines (19) are coupled to the pivotal drive mechanism (9) until one of the pressure-roller levers (34, 35) begins to urge the slide (18) towards one of its end positions in which the slide (18) is disengaged from the pivotal drive mechanism (9).

5. A switching device in a magnetic-tape apparatus for the auto-reverse operation, comprising a drive mechanism (9) which is pivotable between two turntables (12, 13) to drive a first turntable (12) in a first position and a second turntable (13) in a second position, which pivotal drive mechanism when it is pivoted between the first and the second position in the case of a reversal of the direction of tape transport actuates a change-over device (18a) for pressure rollers (32, 33), which device by means of a slide (18) alternately lifts a first or a second pressure roller (32, 33) carried by a lever (34, 35) off an associated capstan (30, 31) against spring force, characterised in that the slide (48) comprises two slide sections (49, 50) which are movable relative to one another, a first slide section (49) being adapted to cooperate with one pressure roller lever (34) and a second slide section (50) being adapted to cooperate with the other pressure roller lever (35), the first slide section (49) is provided with a first armature plate (55) and the second slide section (50) with a second armature plate (56), and the slide sections (49, 50) are moved alternately into end positions by the pivotal drive mechanism (9), in which end positions the pressure rollers (32, 33) are disengaged from the associated capstans (30, 31) and in which the armature plates (55, 56) and hence the slide sections (49, 50) are retained electromagnetically.

6. A switching device as claimed in Claim 5, characterised in that the armature plates (55, 56) are retained by means of an electromagnet device (54) comprising magnet coils (57) and coil formers (54a), the coil former (54a) being traversed by limbs (58a) of two U-shaped iron yokes (58), which limbs are magnetically isolated from one another and whose free ends function as polepieces (58b), the iron yokes being arranged opposite one another in such a way that each time two polepieces (58a) are situated at the location of the two axial coil ends (57a) to cooperate with the first and the second armature plate respectively.

7. A switching device as claimed in Claim 6, characterised in that the limbs (58a) of the iron yokes (58) extend parallel to the slide sections (49, 50).

8. A switching device as claimed in Claims 1 and 5, characterised in that for lifting both pressure rollers (32, 33) alternately one of the pressure rollers (32, 33) is lifted by one of the cam levers (24) and the other pressure roller (32, 33) is lifted by one of the slide sections (49, 50).

9. A switching device as claimed in Claim 8, characterised in that the slide (18) and the slide sections (49, 50) are movable parallel to one another and are moved together by the pivotal drive mechanism (9) *via* an actuating lever (16).

**Revendications**

1. Système de commutation dans un appareil à bande magnétique pour le mode autoreverse, comportant un équipage pivotant (9) entre deux plateaux de bobinage (12, 13) qui, dans une première position, entraîne un premier plateau de bobinage (12) et dans une seconde position, un second plateau de bobinage (13), l'équipage pivotat commandant, lors de l'inversion du sens de défilement de la bande entre la première et la seconde position, un dispositif de commutation (18a) pour les galets presseurs (32, 33), qui, par l'intermédiaire d'un coulisseau (18), écarte alternativement un premier et un second galet presseur (32, 33) montés à rotation sur des leviers (34, 35), à l'encontre de la sollicitation d'un ressort, d'un cabestan (30, 31) associé, caractérisé en ce que chacun des leviers de galets presseurs (34, 35) est commandé par l'intermédiaire d'un premier ou d'un second levier à came (24) pouvant tourner autour d'un axe de rotation (28) et par l'intermédiaire de l'équipage pivotant (9) et du coulisseau (18) et que les leviers à came (24) présentent des cames de commande qui peuvent être suivies par les leviers des galets presseurs (34, 35), auquel cas, lorsque l'équipage pivotant (9) parvient au voisinage du premier ou du second plateau de bobinage (12, 13), un des leviers à came (24) est chaque fois amené par une section de pression (27) de sa came de commande à tourner davantage sous l'effet de la force de ressort exercée sur le levier de galet presseur (34, 35) associé dans une mesure telle que le coulisseau (18) soit repoussé par le levier de galet presseur (34, 35) dans une position extrême (59) dans laquelle l'équipage pivotant (9) est désaccouplé du dispositif de commutation (18a).

2. Système de commutation suivant la revendication 1, caractérisé en ce que le levier à came (24) comporte un ergot (23) qui est relié par engagement positif avec le coulisseau (18), de sorte que le levier à came (24) est entraîné par les déplacements du coulisseau (18) ou que le coulisseau (18) est déplacé par les déplacements d'un des leviers de galets presseurs (34, 35), par l'intermédiaire du levier à came associé.

3. Système de commutation suivant la revendication 2, caractérisé en ce que la came de commande comprend une première section de glissement (26) concentrique à l'axe de rotation (28), qui se raccorde à la section de pression (27) et qui est située à une plus courte distance de l'axe de rotation (28).

4. Système de commutation suivant l'une quelconque des revendications 1 à 3, caractérisé en ce que le coulisseau (18) présente une fourche dont les fourchons (19) sont accouplés à l'équipage pivotant (9), pendant la commande, jusqu'à ce qu'un des leviers de galets presseurs (34, 35) commence à repousser le coulisseau (18) en direction de l'une de ses positions extrêmes dans lesquelles le coulisseau (18) est désaccouplé de l'équipage pivotant (9).

5. Système de commutation dans un appareil à bande magnétique pour le mode autoreverse, comportant un équipage pivotant (9) entre deux plateaux de bobinage (12, 13) qui, dans une première position, entraîne un premier plateau de bobinage (12) et, dans une seconde position, un second plateau de bobinage (13), l'équipage pivotant commandant, lors de l'inversion du sens de défilement de la bande entre la première et la seconde position, un dispositif de commutation (18a) pour des galets presseurs (32, 33) qui, par l'intermédiaire d'un coulisseau (18), écarte alternativement un premier et un second galet presseur (32, 33) montés à rotation sur des leviers (34, 35), à l'encontre de la sollicitation d'un ressort, d'un cabestan (30, 31) associé, caractérisé en ce que le coulisseau (48) est constitué de deux parties (49, 50) pouvant coulisser l'une par rapport à l'autre, une première partie de coulisseau (49) coopérant avec un levier de galet presseur (34) et une seconde partie de coulisseau (50), avec l'autre levier de galet presseur (35), que la première partie de coulisseau (49) est pourvue d'une première plaque d'armature (55) et la seconde partie de coulisseau (50), d'une seconde plaque d'armature (56) et que les parties de coulisseau (49, 50) sont déplacées en alternance par l'équipage pivotant (9) dans des positions extrêmes, dans lesquelles les galets presseurs (32, 33) sont écartés des cabestans associés (30, 31) et les plaques d'armature (55, 56), et ainsi les parties de coulisseau (49, 50), sont immobilisées électromagnétiquement.

6. Système de commutation suivant la revendication 5, caractérisé en ce que les plaques d'armature (55, 56) sont immobilisées au moyen d'un dispositif à électroaimant (54) comportant une bobine d'aimant (57) et un corps de bobine (54a), le corps de bobine (54a) étant traversé par les branches (58a) de deux noyaux de fer coudés en U (58), isolés magnétiquement l'un de l'autre, dont les extrémités libres servent de pièces polaires (58b), les noyaux de fer étant disposés en opposition d'une manière telle que, dans le domaine des deux extrémités axiales de bobine (57a), se trouvent chaque fois deux pièces polaires (58a) qui coopèrent avec la première ou avec la seconde plaque d'armature.

7. Système de commutation suivant la revendication 6, caractérisé en ce que les branches (58a) des noyaux de fer (58) s'étendent parallèlement aux coulisseaux partiels (49, 50).

8. Système de commutation suivant les revendications 1 et 5, caractérisé en ce que pour écarter les deux galets presseurs (32, 33), en alternance, un des galets presseurs (32, 33) est écarté par un des leviers à came (24) et l'autre galet presseur (32, 33) est écarté par un des coulisseaux partiels (49, 50).

9. Système de commutation suivant la revendication 8, caractérisé en ce que le coulisseau (18) et les coulisseaux partiels (49, 50) peuvent coulisser parallèlement l'un à l'autre et être déplacés ensemble par l'équipage pivotant (9) par l'intermédiaire d'un levier de positionnement (16).

Fig.1

Fig.2

Fig.3

Fig.4

Fig.5